**Europäisches Patentamt**

**European Patent Office**

**Office européen des brevets**

(11) Veröffentlichungsnummer: **0 177 484**
**B1**

(12) **EUROPÄISCHE PATENTSCHRIFT**

(45) Veröffentlichungstag der Patentschrift:
**28.10.87**

(51) Int. Cl.⁴: **F 02 M 25/02**, F 02 B 47/02

(21) Anmeldenummer: **85890240.6**

(22) Anmeldetag: **27.09.85**

(54) Speisesystem zum Einführen einer Kraftstoff/Wasserdispersion in eine Brennkraftmaschine.

(30) Priorität: **28.09.84  AT 3094/84**

(43) Veröffentlichungstag der Anmeldung:
**09.04.86 Patentblatt 86/15**

(45) Bekanntmachung des Hinweises auf die Patenterteilung:
**28.10.87 Patentblatt 87/44**

(84) Benannte Vertragsstaaten:
**AT BE CH DE FR GB IT LI LU NL SE**

(56) Entgegenhaltungen:
**DE - A - 3 339 759**
**FR - A - 1 005 004**
**GB - A - 347 797**
**US - A - 3 606 848**
**US - A - 4 412 512**

(73) Patentinhaber: **Hierzenberger, Kurt, Kerpelystrasse 35, A-8704 Leoben (AT)**

(72) Erfinder: **Hierzenberger, Kurt, Kerpelystrasse 35, A-8704 Leoben (AT)**

(74) Vertreter: **Boeckmann, Peter, Dipl.-Ing. et al, Patentanwälte Dipl.-Ing. Peter Boeckmann, Dipl.-Ing. Leo Brauneiss Strohgasse 10, A-1030 Wien (AT)**

## Beschreibung

Die Erfindung betrifft eine Brennkraftmaschine, mit wenigstens einem Verbrennungsraum, dem über eine Dispersionszuführungsleitung eine Dispersion aus über eine Kraftstoffzuführungsleitung zugeführtem, flüssigen und/oder pulverförmigen, gegebenenfalls vergasten Kraftstoff, beispielsweise Benzin oder Dieselöl, und Wasser, sowie über eine Luftzuführungsleitung die für die Verbrennung benötigte Luft zugeführt werden, und der mit einer zur Abfuhr der bei der Verbrennung entstehenden Abgase und Dämpfe dienenden Abgasleitung in Verbindung steht, in welcher ein Kondensatsammelraum für die Aufnahme des bei der Abkühlung der heissen Abgase und Dämpfe entstehenden Kondensates vorgesehen ist, welches über eine Kondensatzuführungsleitung abgeleitet und mit dem über die Kraftstoffzuführungsleitung zugeführten Kraftstoff dispergiert wird.

Die Brennkraftmaschine kann hiebei von einer Kolbenmaschine gebildet sein, bei welcher im Verbrennungsraum ein Kolben vorgesehen ist, die Brennkraftmaschine kann aber auch aus einer Turbine bestehen.

Bei Brennkraftmotoren ist es bereits bekannt, dem Benzin Wasser beizumengen, wodurch sich eine Kraftstoffeinsparung ergibt. Hiezu muss eine Kraftstoff-Wasserdispersion hergestellt werden, welche anstelle des reinen Kraftstoffes dem Verbrennungsraum zugeführt wird.

Es wurde bereits vorgeschlagen, die fertige Dispersion an Tankstellen bereitzuhalten und an entsprechend ausgerüstete Fahrzeuge abzugeben. Die Dispersion wird hiebei bereits in der Raffinerie entweder durch Hochdruckverdüsung oder durch Ultraschalldispergatoren hergestellt. Eine solche Dispersion lässt sich einfach erzeugen und ist von vorzüglicher Qualität, wobei eine Kraftstoffersparnis bis zu ca. 35% realisierbar ist. Es ergeben sich jedoch zahlreiche Nachteile, die eine praktische Verwertung dieses Systems bisher nicht möglich machten. So müssen die Tankstellen mit eigenen Tanks für die Lagerhaltung dieser Dispersion ausgerüstet werden, wobei diese Tanks aus Korrosionsgründen aus nicht rostenden Materialien bestehen müssen. Die Lagerhaltung in diesen Tanks bringt gleichfalls Probleme mit sich, denn einerseits sind die Dispersionen nicht frostbeständig und daher nur bis Temperaturen von ca. −3°C lagerfähig. Ausserdem ist die Lagerfähigkeit auch zeitlich begrenzt, da nach einer gewissen Zeit eine Entmischung stattfindet. Des weiteren muss das gesamte Kraftstoffsystem der mit solchen Dispersionen betriebenen Kraftfahrzeuge einschliesslich des Kraftstoffbehälters aus korrosionsfestem Material hergestellt werden, bei vorhandenen Fahrzeugen also ausgewechselt werden. Schliesslich stellen die grossen durch die Auspuffanlage ausgestossenen Abdampfmengen eine Beeinträchtigung der Umwelt dar. Ein weiterer Nachteil dieses Systems ist darin gelegen, dass sämtliche Kraftfahrzeuge mit dem gleichen Dispersionsverhältnis Kraftstoff: Wasser betrieben werden müssen, da ja nur ein ganz bestimmtes Verhältnis von den Tankstellen abgegeben werden kann.

Man hat auch bereits vorgeschlagen, den Verbrennungsräumen der Brennkraftmaschinen nicht nur Kraftstoff bzw. über einen Vergaser ein Kraftstoff-Luftgemisch zuzuführen, sondern auch über einen zusätzlichen Vergaser oder eine zusätzliche Einspritzausrüstung Wasser zuzuführen. Auch dadurch lässt sich eine Kraftstoffersparnis bis ca. 40% realisieren. Nachteilig ist hiebei, dass nicht nur eine zusätzliche Ausrüstung durch einen Zweitvergaser bzw. eine zusätzliche Einspritzvorrichtung vorgenommen werden muss, sondern dass auch ein zweiter Tank für das Wasser vorgesehen werden muss, welcher beträchtliche Abmessungen aufweisen muss und im gefüllten Zustand eine wesentliche Vergrösserung des Fahrzeuggewichtes mit sich bringt, da ja wesentlich mehr Wasser als Kraftstoff gebraucht wird. Hinzu kommt noch, dass die Verwendung von destilliertem Wasser erforderlich ist, denn normales Leitungswasser würde in Kürze eine Verstopfung der Düsen im Vergaser- bzw. Einspritzsystem mit sich bringen. Die Verwendung von destilliertem Wasser erhöht jedoch die Betriebskosten, so dass, da ja beträchtliche Wassermengen erforderlich sind, die Ersparnis an Kraftstoffkosten wieder weitgehend aufgehoben wird.

Aus der US-A-4 412 512 ist weiters ein Kraftstoffzuführungssystem bekannt, bei welchem das bei der Abkühlung der heissen Abgase und Dämpfe entstehende Kondensat und der Kraftstoff emulgiert werden, wobei die Emulsion über eine Einspritzpumpe einer Brennkraftmaschine zugeführt wird. Nachteilig ist bei dieser bekannten Anordnung der Verlust der Wärme, die durch die Kondensation des Dampfes im Auspuffsystem entsteht. Diese Kondensationswärme entspricht der Verdampfungswärme, die den Verbrennungsgasen entnommen wird. Dies ist der Grund, weshalb die bekannten Anordnungen ein Mischungsverhältnis von ca. 50% Wasser als Obergrenze aufweisen. Wird das Mischungsverhältnis über diesen Wert erhöht, so sinkt der Wirkungsgrad wieder ab.

Die vorliegende Erfindung hat sich zur Aufgabe gestellt, diese Nachteile zu vermeiden und eine Brennkraftmaschine zu schaffen, die mit einer Kraftstoff-Wasserdispersion mit optimalem Wirkungsgrad betrieben werden kann, wobei sämtliche daraus resultierenden Vorteile zunutze gemacht werden, jedoch die zusätzliche Ausrüstung bzw. Umrüstung der Kraftfahrzeuge in Grenzen gehalten werden kann und keine Vergrösserung der Umweltbelastung, sondern vielmehr eine Verringerung derselben, erfolgt. Die Erfindung besteht hiebei im wesentlichen darin, dass in der Abgasleitung einerseits und in der Luftzuführungsleitung oder der Dispersions-Luftgemischzuführungsleitung andererseits ein die zugeführte Verbrennungsluft bzw. das zugeführte Dispersions-Luftgemisch durch die heissen Abgase und Dämpfe erwärmender Wärmetauscher eingeschaltet ist, der mit dem Kondensatsammelraum in Verbindung steht, und dass die Kondensatzuführ-

rungsleitung, in der vorzugsweise eine Kondensatpumpe eingeschaltet ist, mit der Einlassseite eines Dispergators verbunden ist, in dem das Kondensat und der über die Kraftstoffzuführungsleitung zugeführte Kraftstoff dispergiert werden. Bei der erfindungsgemässen Ausbildung der Brennkraftmaschine wird somit durch die Kondensation des in den Abgasen befindlichen Wasserdampfes im Wärmetauscher eine Erwärmung der Verbrennungsluft bzw. des Dispersions-Luftgemisches erzielt. Die erfindungsgemässe Brennkraftmaschine macht sich hiebei den Umstand zunutze, dass der Siedepunkt mit dem Druck ansteigt. Da im Abgassystem stets ein höherer Druck herrscht als im Ansaugrohr, verdampft die in der angesaugten Frischluft enthaltene Dispersion unter Aufnahme der Wärmemenge, die durch die bei höherer Temperatur im Abgassystem kondensierenden Dampfmengen frei wird. Um diese Energiemenge wird bei der erfindungsgemässen Brennkraftmaschine die Energiebilanz verbessert, es erfolgt somit durch die Verwendung des Wärmetauschers eine wesentliche Wirkungsgradsteigerung.

Das Kondensat wird nun für die Herstellung der Dispersion verwendet, die in einem im Kraftfahrzeug befindlichen Dispergator erfolgt, wobei dann diese Dispersion, wie dies bei den bekannten Brennkraftmaschinen in bezug auf den Kraftstoff üblich ist, entweder einem Vergaser zugeführt wird, wo sie mit der Verbrennungsluft gemischt wird und anschliessend über den Wärmetauscher dem Verbrennungsraum zugeleitet wird, oder über ein Einspritzsystem mit Einspritzdüsen direkt in den Wärmetauscher eingespritzt und von dort dem Verbrennungsraum zugeleitet wird. Zum Betrieb der erfindungsgemässen Brennkraftmaschine ist es also nicht erforderlich, dauernd frisches, destilliertes Wasser zuzuführen, es fallen daher die Kosten für die Bereitstellung dieses destillierten Wassers weg und es wird auch kein zusätzlicher Behälter für die Aufnahme dieses destillierten Wassers benötigt. Es werden aber auch die Wasserdämpfe nicht mehr an die Umwelt ausgeschieden.

Die theoretischen Grundlagen beim Betrieb der erfindungsgemässen Brennkraftmaschine sind folgende:

Da eine Brennkraftmaschine ausschliesslich den Druckunterschied zwischen dem expandierenden verbrannten Gas und der Aussenluft nutzen kann, hat es den Anschein, dass die bei der Verbrennung entstehenden hohen Temperaturen nachteilig sind, da sie ja hohe Materialbeanspruchungen hervorrufen.

Tatsächlich sind jedoch diese hohen Temperaturen notwendig, weil bei der Verbrennung kein Volumszuwachs, sondern sogar ein leichtes Volumsdefizit entsteht. Nach den stöchiometrischen Gesetzen entstehen nämlich aus 10,8 l angesaugtem Kraftstoff-Luftgemisch nur 10 l Abgas, wenn dieses ebenfalls bei Normalbedingungen gemessen wird. Der Volumsverlust beträgt also etwa 7,4%. Daraus resultiert, dass die Drucksteigerung bzw. Volumsvermehrung im Motor ausschliesslich auf die starke Temperaturerhöhung bei der Verbrennung zurückzuführen ist. Die Druck- bzw. brennung zurückzuführen ist. Die Druck- bzw.

Volumszunahme kann mit Hilfe der Naturgesetze berechnet werden.

Die vorliegende Erfindung macht sich nun die Tatsache zunutze, dass, wie aus den einschlägigen Tabellen hervorgeht, in einem Liter Benzin genug Wärmeenergie steckt, um ca. 15 l Wasser im Dampf umzusetzen. Praktische Versuche haben gezeigt, dass auch Kraftstoff-Wasserdispersionen in einem Verhältnis von 1:20 anstandslos im Motor verbrannten und von diesem nicht genug expandiert werden konnten, um zu kondensieren. Bei der vorliegenden Erfindung wird nun diese Wärmeenergie genützt, um das mit dem Kraftstoff dispergierte Wasser zu verdampfen, wobei der Dampf den Hauptanteil der Expansionsarbeit leistet und dadurch ähnlich wie bei einer Dampfmaschine die Bewegung der Kolben bzw. der Turbinenschaufeln mit sich bringt.

Die vorliegende Erfindung ermöglicht es, ohne Schwierigkeiten und ohne wesentlichen Aufwand jede vorhandene Brennkraftmaschine umzurüsten, um sie mit einer Kraftstoff-Wasserdispersion betreiben zu können. Beispielsweise bei einem Vergasermotor ist es lediglich nötig, den Wärmetauscher mit dem Kondensatsammelraum und vorzugsweise der Kondensatpumpe, den Dispergator und die erforderlichen Verbindungsleitungen einzubauen und die Düsen des vorhandenen Vergasers so zu vergrössern, dass die ganz wesentlich vergrösserten Flüssigkeitsmengen diese Düsen durchsetzen können. Dafür ist es nicht mehr erforderlich, Feinfilter vorzusehen, denn selbst Verunreinigungen von 1,5 mm Durchmesser, welche normale Vergaser sofort blockieren würden, können diese Düsen vergrösserten Durchmessers anstandslos passieren.

Vorteilhaft ist es, wenn der Dispergator unmittelbar an der Brennkraftmaschine angebracht ist, so dass die für die Verbrennung benötigte Dispersion unmittelbar vor dem Verbrennungsvorgang erzeugt wird und die Dispersionszuführungsleitung kurzgehalten werden kann, also eine Entmischung nicht möglich ist.

Zweckmässig sind die Kraftstoffzuführungsleitung und die Kondensatzuführungsleitung mit einem Steuerblock verbunden, der über eine Leitung mit der Einlassseite des Dispergators in Verbindung steht. In diesem Steuerblock erfolgt eine grobe Vormischung des Kraftstoffes mit dem Kondensat. Des weiteren ermöglicht es dieser Steuerblock, die Menge des dem Dispergator zugeführten Kraftstoffes und die Menge des dem Dispergator zugeführten Kondensates und damit das Mischungsverhältnis Wasser:Kraftstoff zu verändern und den jeweiligen Erfordernissen anzupassen.

Gemäss einem weiteren Merkmal der Erfindung steht die Dispersionszuführungsleitung bzw. ein mit dieser verbundener Mischraum des Dispergators über eine Kreislaufleitung, in der vorzugsweise eine Umwälzpumpe eingeschaltet ist, mit der Einlassseite des Dispergators in Verbindung. Diese Ausführungsform ermöglicht es, überschüssige Mengen der Dispersion wieder zum Dispergator zurückzuleiten, so dass die im Dispergator erzeugte Menge der Dispersion nicht genau auf den Bedarf abgestimmt werden muss, sondern im Dispergator immer eine bestimmte Übermenge erzeugt werden kann, wodurch sichergestellt ist, dass bei allen Betriebsbedingungen immer eine hinreichende Menge Dispersion für die Zufuhr zu den Verbrennungsräumen der Brennkraftmaschine zur Verfügung steht.

Im Wärmetauscher wird, wie bereits erwähnt, fast der gesamte Dampf kondensiert. Dabei werden die Abgase regelrecht gewaschen, wodurch auch die unverbrannten Kohlenwasserstoffe fast zur Gänze abgeschieden werden, da ihr Siedepunkt in der Regel über dem des Wassers liegt. Diese Mengen unverbrannter Kohlenwasserstoffe sind zum Teil im destillierten Wasser gelöst, der Grossteil schwimmt jedoch als dünner Ölfilm auf der Oberfläche dieses destillierten Wassers. Um diese auf der Oberfläche schwimmenden Mengen der unverbrannten Kohlenwasserstoffe wieder zu nützen, mündet gemäss einem weiteren Merkmal der Erfindung die Kondensatzuführungsleitung im oberen Bereich des Kondensatsammelraumes in diesen, d.h., es wird das Kondensat, vorzugsweise über die Kondensatpumpe, im Bereich des Kondensatspiegels aus dem Kondensatsammelraum abgeführt und dabei werden die dort schwimmenden Kohlenwasserstoffe mitgenommen.

Erfindungsgemäss weist der Dispergator ein Gehäuse auf, in dem eine mit der Leitung vom Steuerblock verbundene Hauptdüse angeordnet ist, deren die Düsenöffnung aufweisender Teil aussen von einer Mischdüse umgeben ist, deren Düsenöffnung mit der Düsenöffnung der Hauptdüse fluchtet, wobei der Zwischenraum zwischen der Aussenseite des die Düsenöffnung aufweisenden Teiles der Hauptdüse und der Innenseite des die Düsenöffnung aufweisenden Teiles der Mischdüse mit der Dispersionszuführungsleitung in Verbindung steht. Eine solche Ausbildung des Dispergators stellt die Herstellung einer Dispersion in der erforderlichen Güte sicher. Zweckmässig ist hiebei in der Hauptdüse eine verstellbare Düsennadel vorgesehen, durch deren Verstellung die Strömungsgeschwindigkeit der Dispersion verändert werden kann.

Weiters kann erfindungsgemäss die Hauptdüse als ein im Gehäuse verstellbar angeordneter Einsatzteil ausgebildet sein, so dass die Grösse des Zwischenraumes zwischen der Aussenseite des die Düsenöffnung aufweisenden Teiles der Hauptdüse und der Innenseite des die Düsenöffnung aufweisenden Teiles der Mischdüse verändert werden kann, wodurch eine Grundeinstellung der Durchmischung der entstehenden Dispersion vorgenommen werden kann.

Erfindungsgemäss weist der Wärmetauscher parallel zueinander angeordnete, im wesentlichen vertikale Rohre auf, die an ihrem oberen Ende mit der Abgasleitung verbunden sind und an ihrem unteren Ende in den Kondensatsammelraum münden, wobei diese Rohre in einem Erwärmungsraum angeordnet sind, der in seinem unteren Bereich mit einer Speiseleitung zur Zufuhr der Frischluft bzw. des Dispersions-Luftgemisches und in seinem oberen Bereich mit einer Abfuhrleitung für die erwärmte Frischluft bzw. das erwärmte Dispersions-Luftgemisch verbunden ist. Ein solcher Wärmetauscher, der nach dem Gegenstromprinzip arbeitet, bewirkt praktisch eine vollständige Kondensierung des Dampfes, wobei gleichzeitig eine erwünschte Erwärmung der zugeführten Frischluft und eine Verdampfung der darin enthaltenen Dispersion bewirkt wird. Die Abgase werden, zweckmässig von einer höher gelegenen Stelle des Kondensatsammelraumes, in bekannter Weise über einen Auspuff-Schalldämpfer ins Freie geleitet.

Durch die starke Innenkühlung, die bei der Entstehung des Dampfes im Verbrennungsraum bewirkt wird, können zusätzliche Kühlmassnahmen bei der erfindungsgemässen Brennkraftmaschine wie Ventilatoren, Wasserkühler, Ölkühler oder Kühlgebläse entfallen. Es ist sogar zweckmässig, wenn gemäss einem weiteren Merkmal der Erfindung das Motorgehäuse und/oder der Wärmetauscher mit dem Kondensatsammelraum sowie gegebenenfalls weitere kondensatführende Anlageteile mit einer Wärmeisolation versehen sind. Dadurch werden einerseits die Anwärmzeiten verkürzt und die Schallemission reduziert, anderseits wird hiedurch ein Einfrieren des Kondensates bei niedrigen Temperaturen verhindert.

Um ein Einfrieren des Kondensates zu verhindern bzw. um, sollte bei extrem niedrigen Temperaturen dieses Kondensat eingefroren sein, ein Auftauen zu ermöglichen, können weiters erfindungsgemäss der Kondensatsammelraum und die weiteren kondensatführenden Anlageteile mit Heizeinrichtungen versehen sein.

In der Zeichnung ist die Erfindung an Hand eines Ausführungsbeispieles schematisch veranschaulicht. Die Fig. 1 und 1A zeigen im Prinzip zwei Ausführungsformen einer erfindungsgemässen Brennkraftmaschine. Fig. 2 stellt einen Schnitt durch den Steuerblock und den Emulgator dar und Fig. 3 zeigt den Wärmetauscher der erfindungsgemässen Brennkraftmaschine im Schnitt.

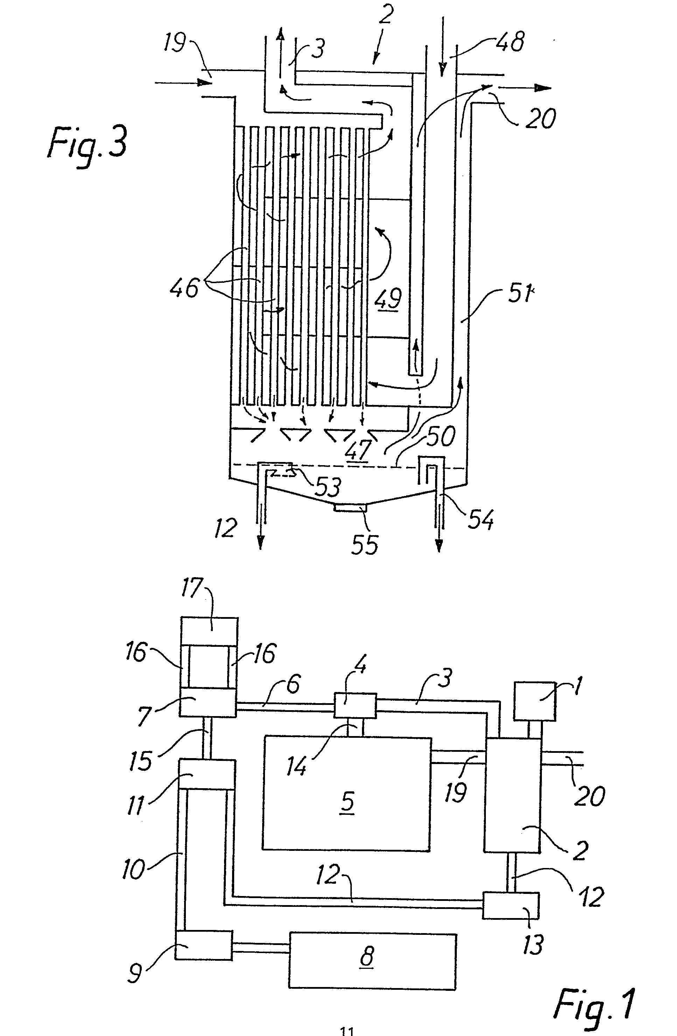

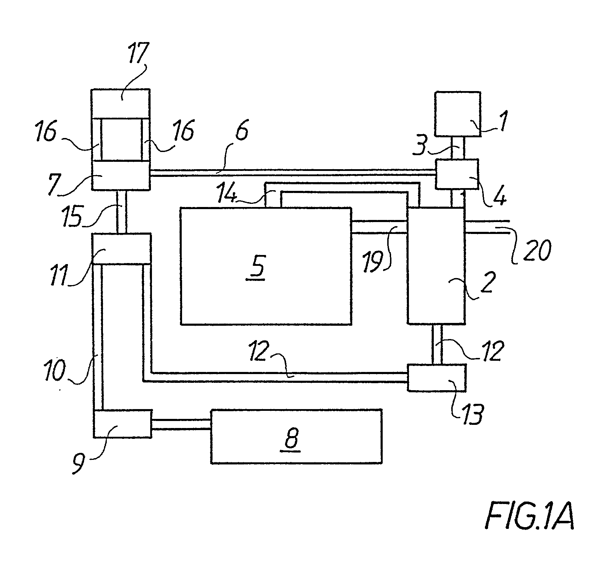

Bei der in Fig. 1 dargestellten Ausführungsform wird über ein Luftfilter 1 Frischluft einem Wärmetauscher 2 zugeführt, dessen Aufbau und Funktionsweise im folgenden noch näher erläutert werden wird. In dem Wärmetauscher 2 wird die Frischluft erwärmt und über eine Luftzuführungsleitung 3 einem Vergaser 4 zugeführt. Die Erwärmung erfolgt hiebei in im folgenden näher beschriebener Weise durch die heissen Abgase und Dämpfe des Motors 5.

Dem Vergaser 4 wird über eine Dispersionszuführungsleitung 6 eine Kraftstoff-Wasserdispersion zugeführt, die in einem Dispergator 7 hergestellt wird, dessen Aufbau und Funktionsweise im folgenden näher erläutert wird. Hiezu werden Kraftstoff aus einem Kraftstofftank 8 mittels einer Kraftstoffpumpe 9 über eine Kraftstoffzuführungsleitung 10 sowie Kondensat mittels einer Kondensatpumpe 13 über eine Kondensatzuführungsleitung 12 einem Steuerblock 11 zugeführt. Das Kondensat entsteht, wie im folgenden näher beschrieben wird, im Wärmetauscher 2 und sammelt sich in einem Kondensatsammelraum desselben.

Diese in Fig. 1 dargestellte Ausführungsform eignet sich für die Beimengung geringer Wasseranteile bis höchstens etwa 50%, weist jedoch den Vorteil des einfachen Aufbaues auf, so dass mit dieser Ausführungsform die Nachrüstung von bereits vorhandenen Anlagen auf einfache Weise möglich ist.

Die Ausführungsform nach Fig. 1A unterscheidet sich von der Ausführungsform nach Fig. 1 dadurch, dass dem Vergaser 4 über die Dispersionszuführungsleitung 6 eine Kraftstoff-Wasserdispersion und vom Luftfilter 1 über die Luftzuführungsleitung 3 unmittelbar Frischluft zugeführt wird. Dem Wärmetauscher 2 wird nun das im Vergaser 4 entstehende Dispersions-Luftgemisch zugeleitet, wo dieses Gemisch erwärmt wird und die Dispersion hiebei verdampft, bevor das Gemisch über die Leitung 14 dem Verbrennungsraum des Motors 5 zugeführt wird. Anstelle des Vergasers kann die Dispersion auch über eine Einspritzdüse in den Wärmetauscher 2 eingespritzt werden. Diese Ausführungsform eignet sich für sehr hohe Wasseranteile, jedoch muss eine gute Abstimmung der geometrischen Abmessungen bezüglich der Gasschwingungen vorgenommen werden. Ausserdem kann in der Leitung 14 eine zweite Drosselklappe bzw. ein zweiter Schieber nahe am Motor 5 erforderlich werden, falls durch ein zu grosses Gasvolumen des Wärmetauschers 2 die Ansprechverzögerung des Motors in unerwünschter Weise ansteigt.

Es ist auch eine Ausführungsform mit zwei Wärmetauschern möglich, wobei ein Wärmetauscher vor dem Vergaser bzw. der Einspritzdüse und der zweite Wärmetauscher zwischen dem Vergaser bzw. der Einspritzdüse und dem Motor angeordnet ist. Eine solche Ausführungsform ist eine Kombination der in den Fig. 1 und 1A dargestellten Ausführungsformen und wird dann bevorzugt angewendet, wenn besonders tiefe Aussentemperaturen zu erwarten sind, da durch den vor dem Vergaser 4 liegenden zweiten Wärmetauscher die Ansaugluft vorgeheizt wird und dadurch die Vereisungsgefahr verringert wird.

Der Steuerblock 11 besteht aus einem in einem Gehäuse angeordneten verdrehbaren Schieber 37, der eine Regulierung sowohl des zugeführten Kraftstoffes als auch des zugeführten Kondensates ermöglicht. In diesem Steuerblock 11 wird also das Mischungsverhältnis Kraftstoff:Kondensat eingestellt und es werden die beiden Komponenten grob vorgemischt, wobei sich durch Verdrehen des Schiebers bestimmte Mischungsverhältnisse der Kraftstoff-Wasserdispersion auch während des Betriebes der Brennkraftmaschine einstellen lassen. Als brauchbar haben sich Werte zwischen 9:1 (90% Wasser) und etwa 24:1 (96% Wasser) erwiesen, je nach Art und Belastungszustand des Motors.

Die im Steuerblock 11 hergestellte Mischung wird über eine Leitung 15 dem Dispergator 7 zugeführt und dort fein dispergiert. Über eine Kreislaufleitung 16, in die eine Umwälzpumpe 17 eingeschaltet ist, wird überschüssige Dispersion wieder zur Einlassseite des Dispergators zurückgeführt.

Das im Vergaser 4 gebildete Dispersions-Luftgemisch wird über die Leitung 14 dem Verbrennungsraum des Motors 5 zugeführt, die Abfuhr der bei der Verbrennung entstehenden Abgase und Dämpfe erfolgt über die Abgasleitung 19, welche zum Wärmetauscher 2 und von dort über das Rohr 20, in das in bekannter Weise ein Auspuff-Schalldämpfer eingeschaltet wird, ins Freie geführt werden.

Im Vergaser 4 wird die Dispersion zerstäubt und ebenso wie gewöhnlicher Kraftstoff mit Luft gemischt. Es ist lediglich nötig, dass der Vergaser für die wesentlich vergrösserten Flüssigkeitsmengen ausgerüstet ist, d.h., dass vor allem der Durchmesser der Düsen wesentlich vergrössert werden muss. Dafür können Feinfilter im Vergaser entfallen, da durch die Düsen mit vergrössertem Durchmesser auch grosse Verunreinigungen anstandslos passieren können. Diese grossen Durchmesser bewirken weiters, dass die Toleranzen hinsichtlich des Verhältnisses Kraftstoff bzw. Dispersion und Luft grösser sein können, da sich eine Veränderung der zugeführten Emulsionsmenge in weiten Grenzen kaum auswirkt.

Der Kraftstoff gelangt in vier Phasen in den Motor:

1. Hauptsächlich als Gas, das bei der Verdampfung nach der Zerstäubung entsteht.

2. Fein verteilt als Partikel in den Wassertropfen, die bei der Zerstäubung entstehen, und im Dispersionsfilm, der an den Wandungen des Ansaugkrümmers zu den Einlassventilen fliesst.

3. Durch die Oberflächenspannung tritt ein Teil der Kraftstoffpartikel an die Oberfläche der Wassertropfen und bildet dort einen dünnen Film.

4. Zum geringen Teil im Wasser aufgelöst.

So gering die Kraftstoffmenge, die sich im Wasser auflöst, auch sein mag, ist sie doch von grosser Bedeutung. Einerseits wird der Gefrierpunkt auf einige Grad unter Null abgesenkt und eine kompakte Eisstruktur verhindert, anderseits wird der Siedepunkt erhöht und das Phänomen des Siedeverzuges bewirkt. Wenn nun das angesaugte Dispersions-Luftgemisch verdichtet wird, entspricht die Druckkurve nicht wie gewöhnlich beinahe der Adiabatenlinie von Luft, sondern verläuft, weil das mitgeführte Wasser einen Teil der bei der Kompression entstehenden Wärme aufnimmt, um zu verdampfen, und ausserdem der Adiabatenexponent des mitgeführten Dampfes kleiner ist als jener von Luft, flacher. Deshalb verzehrt der Verdichtungshub weniger Energie als bei herkömmlichem Betrieb. Zündet nun der Zündfunke der Kerze die brennbaren Gase, so entflammen auch die an der Oberfläche der Dispersionstropfen sich befindlichen Kraftstoffilme, da sie eine im Verhältnis zum Volumen gegenüber vollen Benzintropfen um einige 10-er Potenzen vergrösserte Oberfläche aufweisen.

Dies heizt die ohnehin bereits überhitzten Dispersionstropfen, die sich im Zustand des Siedeverzugs befinden, über die kritische Temperatur auf, so dass sie plötzlich explosionsartig verdampfen und die in ihnen befindlichen Kraftstoffpartikel in molekülgrosse Stücke zerteilen und heftig nach allen Richtungen davonschleudern. Das löst eine Art Kettenreaktion aus, die gleichmässig durch den Brennraum schreitet. Ausserdem spült der entstehende Dampf den Zylinder von Ölkohle und Russ frei, da er sich bei den herrschenden Temperaturen mit ihnen in endothermer Reaktion zu Wasserstoff und Kohlenmonoxyd umsetzt. Diese reagieren durch den hohen Druck und die hohe Temperatur mit weiterem Dampf zu verschiedenen Kohlenwasserstoffen. Da zusätzlich ein kleiner Teil des Wassers thermisch dissoziiert, also sich in $H_2$ und $O_2$ aufspaltet, die Gase jedoch in statu nascendi sind (also atomar), wird eine weitere abgestufte Hydrierung und Oxydation bewirkt. Zudem entzieht der entstehende Heissdampf dem System grosse Wärmemengen, so dass die Spitzentemperaturen stark abgesenkt werden. Die Reaktionen, die hierbei ablaufen, sind denen bei der Benzinsynthese nach Fischer-Tropsch und Kölbel-Engelhardt nicht unähnlich. Der Stickoxydgehalt wird dadurch stark verringert, auch wird der CO-Anteil trotz fettem Gemisch klein gehalten (Boudouard-Gleichgewicht). Der $CH_x$-Anteil in den Abgasen steigt an. Die motoreigene Klopffestigkeit wird stark angehoben, so dass auch hochverdichtete Motoren mit einem Verdichtungsverhältnis von 14:1 und noch mehr ohne weiteres niedrigoktanige, bleifreie Kraftstoffe verarbeiten können. Während des nun folgenden Arbeitstaktes expandieren die Gase wegen des Anteiles an Hochdruckheissdampf stärker als im normalen Otto-Motor.

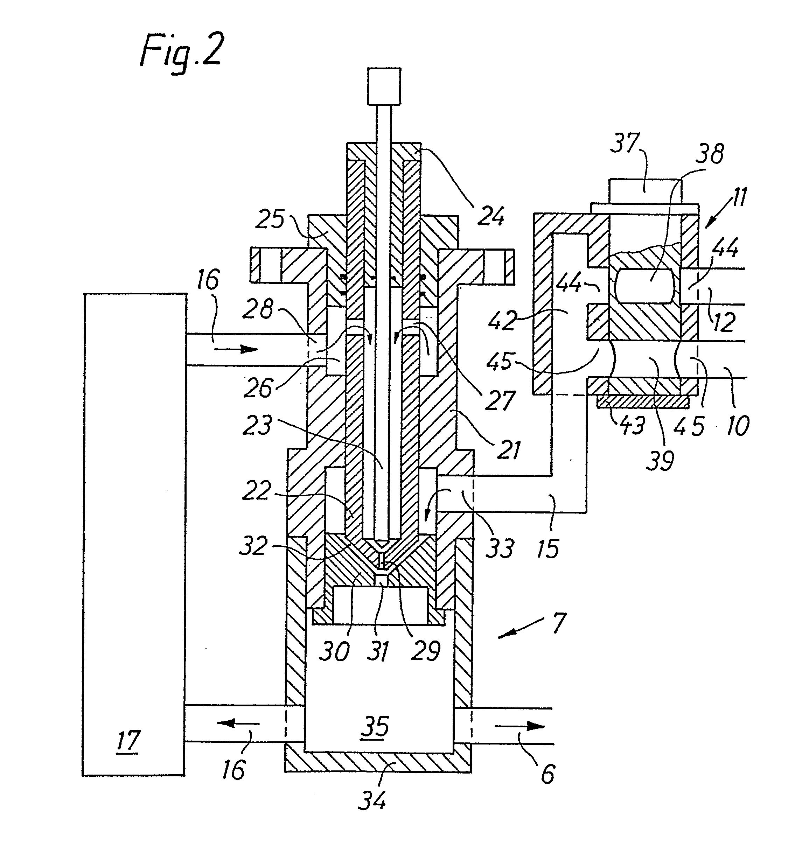

Wie aus Fig. 2 hervorgeht, ist der im Gehäuse des Steuerblockes 11 drehbar gelagerte Schieber 37 durch eine angeschraubte Deckscheibe 43 in Längsrichtung geführt und weist eine Steuerbohrung 38 auf, die über eine Gehäusebohrung 44 einerseits mit der Kondensatzuführungsleitung 12 und andererseits mit einem Sammelraum 42 im Steuerblock 11 verbunden ist. Eine weitere Steuerbohrung 39 im verdrehbaren Schieber 37 ist über eine Gehäusebohrung 45 einerseits mit der Kraftstoffzuführungsleitung 10 und anderseits mit dem erwähnten Sammelraum 42 verbunden. Der Sammelraum 42 steht über die erwähnte Leitung 15 mit der Einlassseite des Dispergators 7 in Verbindung.

Dieser Dispergator 7 weist ein Gehäuse 21 auf, in dem eine Hauptdüse 22 angeordnet ist. In der Hauptdüse 22 befindet sich eine verstellbare Düsennadel 23, die in einem Düsennadelhalter 24 gelagert ist. Der durch eine Dichtungsmuffe 25 abgedichtete Raum 26 steht einerseits über Öffnungsmuffe 25 abgedichtete Raum 26 steht einerseits über Öffnungen 27 mit der Hauptdüse 22 in Verbindung, anderseits über eine Gehäuseöffnung 28 mit der Kreislaufleitung 16.

Der die Düsenöffnung 29 aufweisende Teil der Hauptdüse 22 ist von einer Mischdüse 30 umgeben, deren Düsenöffnung 31 mit der Düsenöffnung 29 fluchtet, wobei der Zwischenraum 32 über eine Einlassöffnung 33 mit der Leitung 15 in Verbindung steht. Die Grösse des Zwischenraumes 32 kann durch Änderung der relativen Lage zwischen Hauptdüse 22 und Mischdüse 30 im Gehäuse 21 verändert werden, wodurch eine Grundeinstellung vorgenommen werden kann. Die durch die beiden Düsen 22, 30 gebildete Kraftstoff-Wasserdispersion gelangt in den von einem mit dem Gehäuse 21 verbundenen Teil 34 begrenzten Mischraum 35 und von dort einerseits über die Dispersionszuführungsleitung 6 zum Vergaser 4, anderseits über die Kreislaufleitung 16 und die Gehäuseöffnung 28 zur Einlassseite des Dispergators 7, so dass die überschüssige Dispersion wieder zum Dispergator 7 zurückgeführt wird.

Der in Fig. 3 dargestellte Wärmetauscher weist mehrere parallele, im wesentlichen vertikale Rohre 46 auf, deren oberes Ende mit der Abgasleitung 19 in Verbindung steht und die mit ihrem unteren Ende in einen Kondensatsammelraum 47 münden. Über eine Speiseleitung 48 wird einem Erwärmungsraum 49, in dem sich die Rohre 46 befinden, entweder bei der Ausführungsform nach Fig. 1 Frischluft oder bei der Ausführungsform nach Fig. 1A vom Vergaser 4 ein Dispersions-Luftgemisch zugeführt. Die Frischluft bzw. das Dispersions-Luftgemisch strömen im Gegenstrom von unten nach oben durch diesen Erwärmungsraum 49 und treten im oberen Bereich des Wärmetauschers 2 aus diesem aus. Die erwärmte Frischluft wird bei der Ausführungsform nach Fig. 1 über die Luftzuführungsleitung 3 dem Vergaser 4 zugeführt, das erwärmte Dispersions-Luftgemisch, bei welchem eine Verdampfung der Dispersion erfolgt, wird bei der Ausführungsform nach Fig. 1A über die Leitung 14 dem Verbrennungsraum des Motors 5 zugeführt. Im Wärmetauscher erfolgt, wie bereits erwähnt, eine Abkühlung der über die Abgasleitung 19 abgeführten heissen Abgase und Dämpfe bei gleichzeitiger Erwärmung der Frischluft bzw. des Dispersions -Luftgemisches, wodurch die Dämpfe kondensieren und sich das Kondensat im Kondensatsammelraum 47 sammelt. Das Flüssigkeitsniveau im Kondensatsammelraum ist durch die strichlierte Linie 50 angedeutet. Die Abgase strömen über den Kanal 51 aufwärts und gelangen in das Rohr 20, in das in an sich bekannter Weise ein Auspuff-Schalldämpfer eingeschaltet ist, ins Freie. Die Abfuhr des Kondensates aus dem Kondensatsammelraum 47 über die Kondensatzuführungsleitung 12 erfolgt bei 53 im Bereich des Flüssigkeitsniveaus 50, so dass auf dem kondensierten Wasser schwimmende Kohlenwasserstoffe gleichfalls abgesaugt werden. Überschüssiges Kondensat wird über einen Überlauf 54 abgeführt. An der tiefsten Stelle des Kondensatsammelraumes ist eine verschliessbare Ablassöffnung 55 zum Entleeren des Kondensatsammelraumes 47 vorgesehen.

Wie bereits erwähnt, benötigt die erfindungsgemässe Brennkraftmaschine keine Kühleinrichtungen, es ist vielmehr zweckmässig, das Gehäuse dieser Brennkraftmaschine mit einer Wärmeisolation zu versehen. Auch sämtliche kondensatführende Anlageteile, insbesondere also auch der Wärmetauscher 2, die Kondensatpumpe 13, die Kondensatzuführungsleitung 12 und der Dispergator 7, sollen gleichfalls wärmeisoliert sein, um ein Einfrieren zu verhindern. Zum gleichen Zweck können die erwähnten Anlageteile, vor allem auch der Kondensatsammelraum 47, mit Heizeinrichtungen versehen sein, die beispielsweise von der Kraftfahrzeugbatterie gespeist werden, und die eine Erwärmung dieser Anlageteile und der darin enthaltenen Medien bewirken.

**Patentansprüche**

1. Brennkraftmaschine, mit wenigstens einem Verbrennungsraum, dem über eine Dispersionszuführungsleitung (6) eine Dispersion aus über eine Kraftstoffzuführungsleitung (10) zugeführtem, flüssigen und/oder pulverförmigen, gegebenenfalls vergasten Kraftstoff, beispielsweise Benzin oder Dieselöl, und Wasser, sowie über eine Luftzuführungsleitung (3) die für die Verbrennung benötigte Luft zugeführt werden, und der mit einer zur Abfuhr der bei der Verbrennung entstehenden Abgase und Dämpfe dienenden Abgasleitung (19) in Verbindung steht, in welcher ein Kondensatsammelraum (47) für die Aufnahme des bei der Abkühlung der heissen Abgase und Dämpfe entstehenden Kondensates vorgesehen ist, welches über eine Kondensatzuführungsleitung (12) abgeleitet und mit dem über die Kraftstoffzuführungsleitung zugeführten Kraftstoff dispergiert wird, dadurch gekennzeichnet, dass in der Abgasleitung (19) einerseits und in der Luftzuführungsleitung (3) oder einer Dispersions-Luftgemischzuführungsleitung anderseits ein die zugeführte Verbrennungsluft bzw. das zugeführte Dispersions-Luftgemisch durch die heissen Abgase und Dämpfe erwärmender Wärmetauscher (2) eingeschaltet ist, der mit dem Kondensatsammelraum (47) in Verbindung steht, und dass die Kondensatzuführungsleitung (12), in der vorzugsweise eine Kondensatpumpe (13) eingeschaltet ist, mit der Einlassseite eines Dispergators (7) verbunden ist, in dem das Kondensat und der über die Kraftstoffzuführungsleitung (10) zugeführte Kraftstoff dispergiert werden.

2. Brennkraftmaschine nach Anspruch 1, dadurch gekennzeichnet, dass der Dispergator (7) unmittelbar an der Brennkraftmaschine angebracht ist.

3. Brennkraftmaschine nach Anspruch 1 oder 2, dadurch gekennzeichnet, dass die Kraftstoffzuführungsleitung (10) und die Kondensatzuführungsleitung (12) mit einem Steuerblock (11) verbunden sind, der über eine Leitung (15) mit der Einlassseite des Dispergators (7) in Verbindung steht.

4. Brennkraftmaschine nach Anspruch 1, 2 oder 3, dadurch gekennzeichnet, dass die Dispersionszuführungsleitung (6) bzw. ein mit dieser verbundener Mischraum (35) des Dispergators (7) über eine Kreislaufleitung (16), in der vorzugsweise eine Umwälzpumpe (17) eingeschaltet ist, mit der Einlassseite des Dispergators (7) in Verbindung steht.

5. Brennkraftmaschine nach einem der Ansprüche 1 bis 4, dadurch gekennzeichnet, dass die Kondensatzuführungsleitung im oberen Bereich des Kondensatsammelraumes (47) in diesen mündet.

6. Brennkraftmaschine nach einem der Ansprüche 1 bis 5, dadurch gekennzeichnet, dass der Dispergator (7) ein Gehäuse (21) aufweist, in dem eine mit der Leitung (15) von Steuerblock (11) verbundene Hauptdüse (22) angeordnet ist, deren die Düsenöffnung (29) aufweisender Teil aussen von einer Mischdüse (30) umgeben ist, deren Düsenöffnung (31) mit der Düsenöffnung (29) der Hauptdüse (22) fluchtet, wobei der Zwischenraum (32) zwischen der Aussenseite des die Düsenöffnung (29) aufweisenden Teiles der Hauptdüse (22) und der Innenseite des die Düsenöffnung (31) aufweisenden Teiles der Mischdüse (30) mit der Dispersionszuführungsleitung (6) in Verbindung steht.

7. Brennkraftmaschine nach Anspruch 6, dadurch gekennzeichnet, dass in der Hauptdüse (22) eine verstellbare Düsennadel (23) vorgesehen ist.

8. Brennkraftmaschine nach Anspruch 6, oder 7, dadurch gekennzeichnet, dass die Hauptdüse (22) als ein im Gehäuse (21) verstellbar angeordneter Einsatzteil ausgebildet ist.

9. Brennkraftmaschine nach einem der Ansprüche 1 bis 8, dadurch gekennzeichnet, dass der Wärmetauscher (2) parallel zueinander angeordnete, im wesentlichen vertikale Rohre (46) aufweist, die an ihrem oberen Ende mit der Abgasleitung (19) verbunden sind, und an ihrem unteren Ende in den Kondensatsammelraum (47) münden, und dass diese Rohre (46) in einem Erwärmungsraum (49) angeordnet sind, der in seinem unteren Bereich mit einer Speiseleitung (48) zur Zufuhr der Frischluft bzw. des Dispersions-Luftgemisches und in seinem oberen Bereich mit einer Abfuhrleitung (19) für die erwärmte Frischluft bzw. das erwärmte Dispersions-Luftgemisch verbunden ist.

10. Brennkraftmaschine nach einem der Ansprüche 1 bis 9, dadurch gekennzeichnet, dass das Motorgehäuse und/oder der Wärmetauscher (2) mit dem Kondensatsammelraum (47) sowie gegebenenfalls weitere kondensatführende Anlageteile mit einer Wärmeisolation versehen sind.

11. Brennkraftmaschine nach einem der Ansprüche 1 bis 10, dadurch gekennzeichnet, dass der Kondensatsammelraum (47) und gegebenenfalls weitere kondensatführende Anlagteile mit Heizeinrichtungen versehen sind.

**Revendications**

1. Moteur à combustion interne avec au moins une chambre de combustion à laquelle est amenée par l'intermédiaire d'une tuyauterie d'arrivée d'émulsion (6) une émulsion d'un carburant liquide et/ou en poudre, éventuellement gazéifié, par exemple essence ou carburant pour moteur Diesel, amené par une tuyauterie d'arrivée de carburant (10) et par de l'eau, et à laquelle est également-

ment amené par une conduite d'arrivée d'air (3) l'air nécessaire pour la combustion, chambre de combustion qui est en liaison avec un canal d'échappement des gaz (19) servant à évacuer les gaz et vapeurs produits par la combustion dans lequel est prévue une chambre collectrice de condensat (47) pour recevoir le condensat formé lors du refroidissement des gaz d'échappement chauds et des vapeurs qui est évacué par une tuyauterie d'arrivée de condensat (12) et est émulsionné avec le carburant amené par la tuyauterie d'arrivée du carburant, caractérisé en ce qu'il est intercalé dans le canal d'échappement des gaz (19), d'une part, et dans la tuyauterie d'arrivée d'air (3) ou dans une conduite d'arrivée du mélange d'émulsion et d'air, d'autre part, un échangeur de chaleur (2) réchauffant grâce aux gaz d'échappement chauds et aux vapeurs l'air de combustion amené ou le mélange d'émulsion et d'air amené qui est en liaison avec la chambre collectrice de condensat (47), et que la tuyauterie d'arrivée de condensat (12), dans laquelle est de préférence montée une pompe d'extraction de condensat (13), est reliée au côté admission d'un émulseur (7) dans lequel sont émulsionnés le condensat et le carburant amené par la tuyauterie d'arrivée de carburant (10).

2. Moteur à combustion interne selon la revendication 1, caractérisé en ce que l'émulseur (7) est monté directement sur le moteur à combustion interne.

3. Moteur à combustion interne selon la revendication 1 ou 2, caractérisé en ce que la tuyauterie d'arrivée du carburant (10) et la tuyauterie d'arrivée du condensat (12) sont reliées à un bloc de commande (11) qui est en liaison par une conduite (15) avec le côté d'admission de l'émulseur (7).

4. Moteur à combustion interne selon une quelconque des revendications 1, 2 ou 3, caractérisé en ce que la tuyauterie d'arrivée d'émulsion (6) ou une chambre de mélange (35) de l'émulseur (7) reliée à celle-ci est en liaison avec le côté admission de l'émulseur (7) par une conduite de recyclage (16) dans laquelle est montée de préférence une pompe de circulation (17).

5. Moteur à combustion interne selon une quelconque des revendications 1 à 4, caractérisé en ce que la tuyauterie d'arrivée de condensat débouche dans la chambre collectrice de condensat (47) dans la partie supérieure de celle-ci.

6. Moteur à combustion interne selon une quelconque des revendications 1 à 5, caractérisé en ce que l'émulseur (7) possède un carter (21) dans lequel est disposée une buse principale (22) reliée à la conduite (15) venant du bloc de commande (11) dont la partie présentant l'ouverture de buse (29) est entourée extérieurement par une tuyère mélangeuse (30) dont l'ouverture (31) est située dans le prolongement de l'ouverture (29) de la buse principale (22), l'intervalle (32) entre le côté extérieur de la partie de la buse principale (22) présentant l'ouverture de buse (29) et le côté intérieur de la partie de la tuyère mélangeuse (30) présentant l'ouverture de tuyère (31) étant en liaison avec la tuyauterie d'arrivée d'émulsion (6).

7. Moteur à combustion interne selon la revendication 6, caractérisé en ce qu'il est prévu dans la buse principale (22) une aiguille d'injection (23) réglable.

8. Moteur à combustion interne selon la revendication 6 ou 7, caractérisé en ce que la buse principale (22) se présente sous la forme d'une pièce d'insertion disposée régable dans le carter (21).

9. Moteur à combustion interne selon une quelconque des revendications 1 à 8, caractérisé en ce que l'échangeur de chaleur (2) présente des tubes (46) sensiblement verticaux, disposés parallèlement entre eux, qui sont reliés à leur extrémité supérieure au canal d'échappement des gaz (19) et débouchent à leur extrémité inférieure dans la chambre collectrice de condensat (47), et que ces tubes (46) sont disposés dans une chambre de réchauffage (49) qui est reliée dans sa partie inférieure avec une conduite d'alimentation (48) destinée à amener l'air frais ou le mélange d'émulsion et d'air, et, dans sa partie supérieure, à une conduite d'évacuation (19) destinée à évacuer l'air frais réchauffé ou le mélange d'émulsion et d'air réchauffé.

10. Moteur à combustion interne selon une quelconque des revendications 1 à 9, caractérisé en ce que le bâti du moteur et/ou l'échangeur de chaleur (2) avec la chambre collectrice de condensat (47) ainsi qu'éventuellement d'autres parties de l'installation dans lesquelles circule le condensat sont pourvus d'une isolation thermique.

11. Moteur à combustion interne selon une quelconque des revendications 1 à 10, caractérisé en ce que la chambre collectrice de condensat (47) et éventuellement d'autres parties de l'installation dans lesquelles circule le condensat sont pourvues de dispositifs de chauffage.

## Claims

1. Internal-combustion engine comprising at least one combustion chamber, to which are supplied via a dispersion supply conduit (6) a dispersion of fuel, supplied via a fuel supply conduit (10), of liquid and/or pulverulent, optionally gasified, fuel, for example gasoline or Diesel-engine oil, and water as well via an air supply conduit (3) the air required for the combustion and which is in connection with an exhaust conduit (19) serving the purpose of discharging the waste gases and vapours generated during the combustion, in which exhaust conduit is provided a condensate collecting chamber (47) for receiving the condensate produced on cooling the hot waste gases and vapours, which condensate is discharged via a condensate supply conduit (12) and is dispersed with the fuel supplied via the fuel supply conduit, characterized in that a heat exchanger (2) heating the supplied combustion air and the supplied dispersion-air-mixture is interconnected into the exhaust conduit (19), on the one hand, and into the air supply conduit (3) or into a supply conduit for the dispersion-air-mixture, on the other hand, said heat exchanger being in connection with the condensate collecting chamber (47), and in that the condensate supply conduit (12), into which is preferably interconnected a condensate pump (13), is connected with the entry side of a dispergator (7), within which are dispersed the condensate and the fuel supplied via the fuel supply conduit (10).

2. Internal-combustion engine according to claim 1, characterized in that the dispergator (7) is mounted directly on the internal-combustion engine.

3. Internal-combustion engine according to claim 1 or 2, characterized in that the fuel supply conduit (10) and the condensate supply conduit (12) are connected with a control unit (11), which is in connection with the entry side of the dispergator (7) via a conduit (15).

4. Internal-combustion engine according to claim 1, 2 or 3, characterized in that the dispersion supply conduit (6) or a mixing chamber (35), which is connected with said dispersion supply conduit, of the dispergator (7), respectively, is in connection with the entry side of the dispergator (7) via a circulating conduit (16) into which is preferably interconnected a circulating pump (17).

5. Internal-combustion engine according to any of claims 1 to 4, characterized in that the condensate supply conduit opens into the condensate collecting chamber (47) at the upper area thereof.

6. Internal-combustion engine according to any of claims 1 to 5, characterized in that the dispergator (7) has a housing (21), within which is arranged a main nozzle (22) connected with the conduit (15) from the control unit (11), that part of the main nozzle, which comprises the nozzle opening (29), being exteriorily surrounded by a mixing nozzle (30) having its nozzle opening (31) in alignment with the nozzle opening (29) of the main nozzle (22), noting that the interstice (32) between the outer side of that part of the main nozzle (22), which has the nozzle opening (29), and the inner side of that part of the mixing nozzle (30), which has the nozzle opening (31), is in connection with the dispersion supply conduit (6).

7. Internal-combustion engine according to claim 6, characterized in that an adjustable nozzle needle (23) is provided within the main nozzle (22).

8. Internal-combustion engine according to claim 6 or 7, characterized in that the main nozzle (22) is designed as an insert member being adjustably arranged within the housing (21).

9. Internal-combustion engine according to any of claims 1 to 8, characterized in that the heat exchanger (2) comprises substantially vertical tubes (46) being parallely arranged one relative to the other and being connected at their upper ends with the exhaust gas conduit (19) and opening at their bottom ends into the condensate collecting chamber (47) and in that these tubes (46) are arranged within a heating chamber (49), which is connected at its lower area with a supply conduit (48) for supplying the fresh air or the dispersion-air-mixture, respectively, and in its upper area with a discharge conduit (19) for the heated fresh air or the heated dispersion-air-mixture, respectively.

10. Internal-combustion engine according to any of claims 1 to 9, characterized in that the motor housing and/or the heat exchanger (2) together with the condensate collecting chamber (47) as well as, optionally, further condensate-leading parts of the equipment are provided with a heat insulation.

11. Internal-combustion engine according to any of claims 1 to 10, characterized in that the condensate collecting chamber (47) and, optionally, further condensate-leading parts of the equipment are provided with heating means.

Fig.3

Fig.1

FIG.1A

# Fig.2